# EUROPEAN PATENT APPLICATION

(11) **EP 4 597 645 A1**
(43) Date of publication of application: **06.08.2025**
(21) Application number: 23872276.3
(22) Date of filing: 25.09.2023
(51) Int. Cl.: H01M 8/02, H01M 8/0206, H01M 8/0215, H01M 8/0228, H01M 8/0247, H01M 8/0258, H01M 8/0271, H01M 8/10, H01M 8/12, H01M 8/2425, H01M 8/2465, H01M 8/2475

(54) **PORTABLE SMALL FUEL CELL**

(30) Priority: 27.09.2022 JP 2022153347
(71) Applicant: INSTITUTE OF SCIENCE TOKYO, Tokyo 152-8550 (JP)
(72) Inventor: YAMADA Tetsuya, Tokyo 152-8550 (JP); TORIKAI Ryutaro, Tokyo 152-8550 (JP); YANAGIDA Yasuko, Tokyo 152-8550 (JP); MATSUSHITA Shintaro, Tokyo 152-8550 (JP); TAKEDA Daiki, Kanazawa-shi Ishikawa 920-8203 (JP)
(74) Representative: Meissner Bolte Partnerschaft mbB
(86) International application number: PCT/JP2023/034774
(87) International publication number: WO 2024/071053

(57) **Abstract**

To provide a small fuel cell with a high level of power generation efficiency and portability. The portable small fuel cell includes cell (10), first board (20), second board (30) and vacuum container (50). First board (20) includes first inlet channel (24) for introducing reducing fuel gas, and first outlet channel (25) for discharging reducing fuel exhaust gas. First inlet channel (24) and first outlet channel (25) are disposed adjacent enough with each other for heat exchangeable within first cantilever portion (22). Second board (30) includes second inlet channel (34) for introducing oxidant fuel gas, and second outlet channel (35) for discharging oxidant fuel exhaust gas. Second inlet channel (34) and second outlet channel (35) are disposed adjacent enough with each other for heat exchangeable within the second cantilever portion (32). Vacuum container (50) encircles first board (20) and second board (30), first fixed portion (23) and second fixed portion (33) are fixed thereto, and the vacuum container (50 traps heat generated from cell (10) to seal it therein.

## Description

### Technical Field

The present invention relates to a small fuel cell, and more particularly to a small fuel cell with portability.

### Background Art

Fuel cells are a type of battery capable of extracting electric power from fuel chemical energy via electric chemical reaction. A fuel cell employs cells in which there is electrolyte between an anode and a cathode. There are several types of fuel cells depending on the type of electrolyte to be used, among other things. For example, Solid Oxide Fuel Cell (SOFC) is of a type that uses yttria-stabilized zirconia (YSZ) as electrolyte. The SOFC's operating temperature is high, between 700 and 1,000 degrees Celsius, so the advantage is high energy density, as well as its capability to achieve high efficiency as a whole by using high-temperature exhaust gas. However, in order for the technology to be applied to make a portable small fuel cell, the high heat-resistance and the thermal insulation are needed.

A conventional portable SOFC generally employs a method of making integrated fuel cells on the board with MEMS (Micro-Electro-Mechanical System) (Non-Patent Document 1).

The technology disclosed in Patent Document 1 is known as an evaluation holder designed for SOFC's performance evaluation test. The evaluation holder of Patent Document 1 holds, as a test target, a SOFC in an alumina case, which has a gas introducing tube and a gas exhaust tube, so that the performance evaluation test can be carried out in a stable manner regardless of the size of SOFC cells.

### Citation List

### Patent Document

Patent Document 1: JP 2015 - 032 553 A

### Non-Patent Document

Non-Patent Document 1: Review on microfabricated micro-solid oxide fuel cell membranes, Anna Evans et al., Journal of Power Sources 194(2009), pp. 119-129

### Disclosure of the Invention

### Problems to be Solved by the Invention

However, the problem with the portable SOFC that uses MEMS as described in Non-Patent Document 1 is that it costs too much. Also, due to a difference between the thermal expansion coefficients of the board and the cells, the board and the cells could break down when running at a high temperature, so that there is the problem in which it is difficult to operate at a high temperature.

Furthermore, not only the heat resistance but also the thermal insulation is important in order to improve power generation efficiency with operating at a high temperature while reducing heat losses. However, the problem with the evaluation holder as described in Patent Document 1 is that, when they are applied as fuel cells with a practical level of portability, there are large heat losses and low power generation efficiency. Specifically, with the gas introducing tube and the gas exhaust tube as being two separate tubes, the thermal stress is dispersed, and heat utilization efficiency is poor. Furthermore, due to the alumina case and a difference in the thermal expansion coefficients of the gas tubes, the gas tubes could end up being distorted.

The present invention has been made in view of the above situation, and an object thereof is to provide a portable small-sized fuel cell with a high level of heat resistance, insulation and power generation efficiency.

### Means for Solving the Problems

To achieve the aim of the present invention, a small fuel cell of the present invention may include: a cell that has an anode, a cathode and an electrolyte in-between; a first board for accommodating the cell, which includes a first main portion, where the cell is placed, a first cantilever portion, which extends from the first main portion, a first fixed portion, which extends from the first cantilever portion and fixes the first cantilever portion, a first inlet channel, which is configured to introduce reducing fuel gas into the anode of the cell, a first outlet channel, which is configured to discharge reducing fuel exhaust gas from the anode of the cell, the first inlet channel and the first outlet channel being disposed adjacent enough with each other for heat exchangeable within the first cantilever portion; a second board for accommodating the cell along with the first board to cover the cell, which includes a second main portion, where the cell is placed, a second cantilever portion, which extends from the second main portion in such a way to align with an extension direction of the first cantilever portion, a second fixed portion, which extends from the second cantilever portion and fixes the second cantilever portion, a second inlet channel, which is configured to introduce oxidant fuel gas into the cathode of the cell, a second outlet channel, which is configured to discharge oxidant fuel exhaust gas from the cathode of the cell, the second inlet channel and the second outlet channel being disposed adjacent enough with each other for heat exchangeable within the second cantilever portion; and a vacuum container for trapping heat generated from the cell inside, which encircles the first board and the second board and where the first fixed portion and the second fixed portion are fixed.

The first board and the second board may be made of ceramics, glass or inorganic crystal.

The first board and the second board may be stacked or formed integrally.

The small fuel cell may be a stack of board structures, each of which includes the cell, the first board and the second board, in such a way that, when seen in a top view, extension directions of the first cantilever portions are aligned with each other.

In the multilayered small fuel cell, the first inlet channels may be connected together as parallel channels, the first outlet channels may be connected together as parallel channels, the second inlet channels are connected together as parallel channels, and the second outlet channels may be connected together as parallel channels.

In the multilayered small fuel cell, the first outlet channel may be connected to another first inlet channel in series, and the second outlet channel may be connected to another second inlet channel in series.

The first board or the second board may have a metal portion for a heater or a temperature sensor.

In the first board and the second board, a thin metal film for radiation mitigation may be formed on the opposite sides of the first and second main portions from where the cell is placed, or on the opposite sides of the first and second main portions from where the cell is placed and on their sides.

The first cantilever portion may be shaped in such a way as to expand toward the first fixed portion; and the second cantilever portion may be shaped in such a way as to expand toward the second fixed portion.

The first inlet channel and the first outlet channel may be provided in the form of a first concave groove provided on the first board; the second inlet channel and the second outlet channel may be provided in the form of a second concave groove provided on the second board; and the first inlet channel and the first outlet channel may each be placed in such a way as not to overlap with the second inlet channel and the second outlet channel, respectively, when seen in a top view.

The small fuel cell may further include a spacer board that is placed between the first board and the second board, wherein the spacer board includes a spacer main portion, which includes a through-hole space for accommodating the cell, a spacer cantilever portion, which extends from the spacer main portion in such a way as to align with an extension direction of the first cantilever portion, and a spacer fixed portion, which extends from the spacer cantilever portion and fixes the spacer cantilever portion.

The first inlet channel and the first outlet channel may be provided in the form of a first concave groove provided on the first board and/or the spacer board; and the second inlet channel and the second outlet channel may be provided in the form of a second concave groove provided on the second board and/or the spacer board.

The first inlet channel and the first outlet channel may be placed in such a way as to overlap with the second outlet channel and the second inlet channel, respectively, when viewed in top view.

The small fuel cell may further include a fuel reforming catalyst for reforming a reducing fuel gas being introduced into the anode of the cell, wherein the fuel reforming catalyst is placed near the cell at the first inlet channel.

The first fixed portion may be placed in such a way as to encircle the periphery of the first main portion; the second fixed portion may be placed in such a way as to encircle the second main portion; and the first fixed portion and second fixed portion may be fixed to a vacuum container in a sealed state.

The cell may be a flat-plate cell or a tube-type cell.

The small fuel cell may further include a venturi tube structure placed in the first outlet channel that has a throat portion, whose channel cross-sectional area is smaller than that of the first outlet channel, causing a venturi effect through the throat portion, the venturi tube structure including an inlet placed at the throat portion, and the second outlet channel connected to the inlet.

The second outlet channel may be connected in such a way as to run obliquely to the downstream direction of a flow of reducing fuel gas of the venturi tube structure relative to the inlet.

The second outlet channel may have a constricted portion, whose channel cross-sectional area is smaller than that of the second outlet channel, where the second outlet channel is connected to the inlet of the venturi tube structure.

The fuel of the small fuel cell may be a liquid fuel, and the small fuel cell may further include a capillary structure placed in the first inlet channel to take in the liquid fuel, whose channel cross-sectional area is smaller compared to the first inlet channel so that a capillary phenomenon is obtained.

The capillary structure may be placed where the structure is heated by operational temperature of the cell.

The capillary structure may be configured to cause a reducing fuel gas through the heating and evaporation of liquid fuel being taken in.

### Advantageous Effects of the Invention

The small fuel cell according to the present invention has an advantage that it is portable and has a high level of heat resistance, thermal insulation and power generation efficiency.

### Brief Description of the Drawings

- FIG. 1: is a schematic diagram for explaining a small fuel cell of the present invention.
- FIG. 2: is a schematic diagram for explaining in detail a first board, a second board and a spacer board of a small fuel cell of the present invention.
- FIG. 3: is a schematic diagram for explaining in detail the case in which a board of a small fuel cell of the present invention is of a two- layered structure.
- FIG. 4: is a partial, schematic side sectional view for explaining an example of the case in which a small fuel cell of the present invention has a fuel reforming catalyst.
- FIG. 5: is a schematic exploded perspective view for explaining in detail another example of a fixed part of a board of a small fuel cell of the present invention.
- FIG. 6: is a schematic side sectional view for explaining an example in which a fixed part of a board of a small fuel cell of the present invention is fixed to a vacuum container.
- FIG. 7: is a schematic side view for explaining in detail an example in which a small fuel cell of the present invention is of a layered structure.
- FIG. 8: is a schematic side view for explaining in detail another example in which a small fuel cell of the present invention is of a layered structure.
- FIG. 9: is a schematic side sectional view for explaining an intake-discharge system of a small fuel cell of the present invention.
- FIG. 10: is a schematic diagram for explaining in detail the case in which a venturi tube structure is incorporated into a three-layered structure board of a small fuel cell of the present invention.

### Best Mode for Carrying Out the Invention

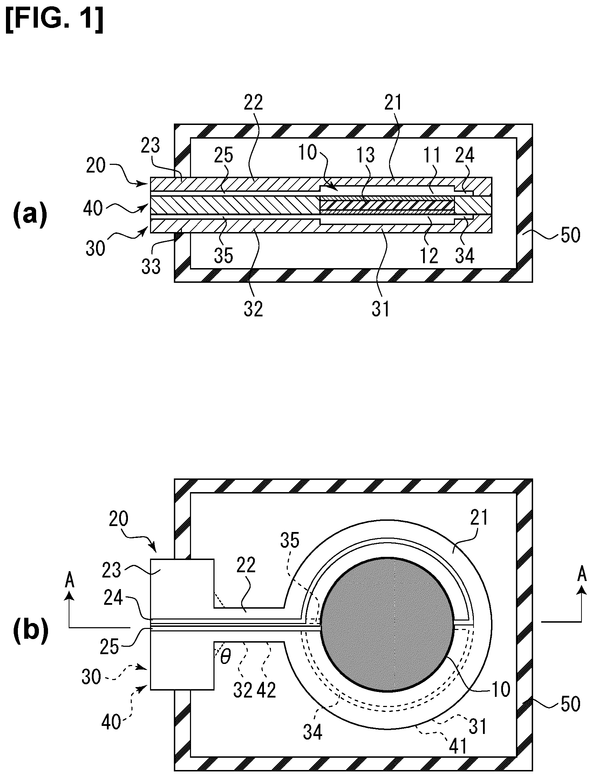

Hereinafter, an embodiment for practicing the present invention will be described with reference to the accompanying drawings. The small fuel cell of the present invention is of a portable type. FIG. 1 is a schematic diagram for explaining a small fuel cell according to the present invention; FIG. 1(a) is a side sectional view and FIG. 1(b) is a partial sectional top view. As illustrated, a small fuel cell of the present invention has a cell 10, a first board 20, a second board 30, a spacer board 40, and a vacuum container 50.

The cell 10 includes an anode 11 and a cathode 12, and an electrolyte 13 therebetween. In the description below, an example is explained in which a Solid Oxide Fuel Cell (SOFC) is used as cell 10 in general, however the present invention is not limited to this. One that operates at high temperature is preferable as the cell 10. Besides the SOFC, for example, a Molten Carbonate Fuel Cell (MCFC) and a Protonic Ceramic Fuel Cell (PCFC) are applicable. Furthermore, the present invention is not necessarily limited to the one that operates at high temperatures, but one operating at low temperatures, which are capable of reducing heat losses while improving power generation efficiency: for example, a Phosphoric Acid Fuel Cell (PAFC), a Polymer Electrolyte Fuel Cell (PEFC), an Alkaline Fuel Cell (AFC) and others are applicable. Moreover, a Solid Oxide Electrolyzer Cell (SOEC) is also applicable. In addition, any existing or future fuel cells are applicable.

The cell 10 is a flat plate cell in the illustrated example. In the description below, flat plate cells, more specifically circular flat plate cells, will be used as an example. However, the present invention is not limited to this. The cell may also be a square flat plate cell. The cell 10 may be a tube-type cell. The tube-type cell is not limited to one with one tube, but it could be a bundle of multiple tubes.

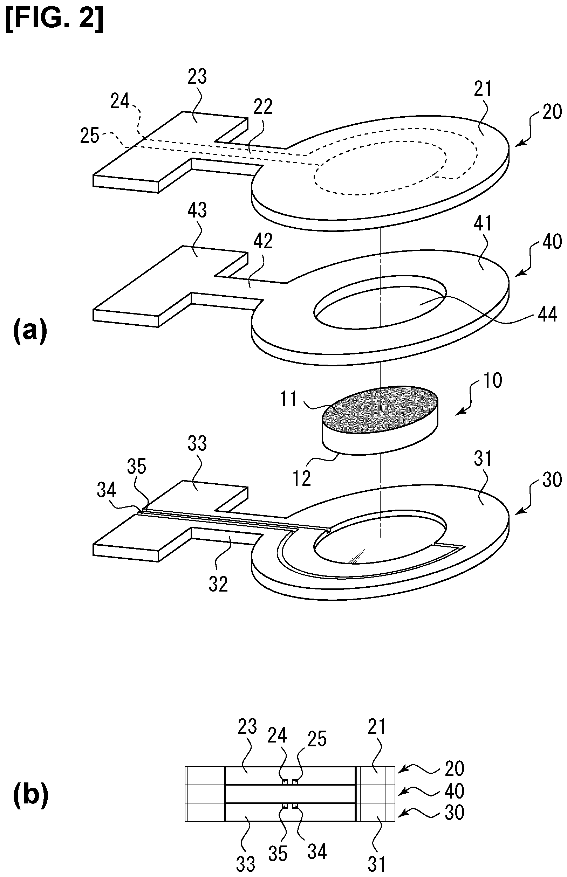

The first board 20, the second board 30 and the spacer board 40 will be described in detail using FIG. 2. FIG. 2 is a schematic diagram for explaining in detail the first board, the second board and the spacer board of a small fuel cell of the present invention; FIG. 2(a) is an exploded perspective view and FIG. 2(b) is a side view, when seen from a side of a fixed part. In the drawing, the same reference numerals as those in FIG. 1 denote the same parts. The example described in the drawing is about a three-layered structure using the first board 20, the second board 30 and the spacer board 40. However, the present invention is not limited to this, and could employ a two-layered structure not having a spacer board. The drawings only show the cell and the boards, while omitting other parts.

The first board 20 accommodates the cell 10. The first board 20 may, for example, be made of ceramics. The present invention is not limited to this, but the first board 20 may be, for example, glass, inorganic crystal or any other substance.

As shown in the drawing, the first board 20 includes a main portion 21, a first cantilever portion 22 and a first fixed portion 23. The first main portion 21 is on which the cell 10 is placed. In the illustrated example, a cylinder-shaped hollow is provided on which the cell 10 is placed. The first cantilever portion 22 extends from the first main portion 21. The first cantilever portion 22 is thinner than the first main portion 21, and supports the first main portion 21 with one beam. The first fixed portion 23 fixes the first cantilever portion 22. The first fixed portion 23 is for the portion to which the vacuum container 50 described below is fixed.

The first board 20 includes a first inlet channel 24 and a first outlet channel 25. In the illustrated example, the first inlet channel 24 and the first outlet channel 25 are provided in the form of a first concave groove which is disposed on the first board 20. The first inlet channel 24 is for the introduction of the reducing the fuel gas into the anode 11 of the cell 10. More specifically, the first inlet channel 24 is for introducing the reducing fuel gas into the anode 11 of the cell 10 placed on the first main portion 21 via the first cantilever portion 22 from the first fixed portion 23. The reducing fuel gas is, for example, hydrogen or the like. The first outlet channel 25 is for discharging the reducing fuel exhaust gas from the anode 11 of the cell 10. More specifically, the first outlet channel 25 is for discharging the reducing fuel exhaust gas from the first fixed portion 23 via the first cantilever portion 22 from the anode 11 of the cell 10 placed on the first main portion 21.

The reducing fuel gas includes unreacted gas. In the small fuel cell of the present invention, one of the characteristics is that the the first inlet channel 24 and the first outlet channel 25 are disposed adjacent enough with each other for heat exchangeable within the first cantilever portion 22. That is, the first inlet channel 24 is a passage through which low-temperature gas flows, and the first outlet channel 25 is a passage through which the high-temperature gas flows after passing through the cell 10. These channels are disposed adjacent enough with each other for heat exchangeable, so that the high-temperature reducing fuel exhaust gas flowing through the first outlet channel 25 can be cooled by the low-temperature reducing fuel gas flowing through the first inlet channel 24. Conversely, the low-temperature reducing fuel gas flowing through the first inlet channel 24 can be heated by the high-temperature reducing fuel exhaust gas flowing through the first outlet channel 25. This prevents the first cantilever portion 22 from being heated up unnecessarily, and this also makes it possible to introduce the reducing fuel gas into the anode 11 after heating the gas up with the reducing fuel exhaust gas. This can improve power generation efficiency.

Within the first cantilever portion 22, the closer first inlet channel 24 and first outlet channel 25 are, and the smaller the cross-sectional areas of the channels, the more likely heat exchange is to occur. The heat exchange is also more likely to occur with a rectangular channel cross-sectional area and by making wider the plane of the first inlet channel 24 and its opposing plane of the first outlet channel 25. Further, in the illustrated example, when seen from the first fixed portion 23, a bypass channel is provided near the cell 10 in such a way that the first inlet channel 24 is to introduce the reducing fuel gas from the far side of the first main portion 21 to the cell 10; a linear channel is provided from the cell 10 in such a way that the first outlet channel 25 is to discharge the reducing fuel exhaust gas from the near side of the first main portion 21. This allows the gas to go around near the heated cell 10, which makes it possible to further heat up the reducing fuel gas with the heat from the cell 10 when the reducing fuel gas is introduced.

For the first board 20, since the same material, such as ceramics, is used to form the first main portion 21, the first cantilever portion 22, the first fixed portion 23, the first inlet channel 24 and the first outlet channel 25, there will be no problems with differences in thermal expansion coefficients. The first main portion 21, the first cantilever portion 22 and the first fixed portion 23 are not necessarily limited to those integrally formed from the same material. They may be individually separated parts and combined together so long as they have close thermal expansion coefficients.

The second board 30 is designed to accommodate, along with the first board 20, the cell 10 in such a way to cover the cell. The second board 30 may be made of ceramics as well. The present invention is not limited to this. The second board 30 may be glass, inorganic crystal or the like.

As shown in FIG. 2, the second board 30 has a similar basic structure to the first board 20. The second board 30 includes a second main portion 31, a second cantilever portion 32 and a second fixed portion 33. The second main portion 31 is on which the cell 10 is placed. In the illustrated example, a cylinder-shaped hollow is provided on which the cell 10 is placed. The second cantilever portion 32 extends from the second main portion 31. The second cantilever portion 32 is thinner than the second main portion 31, and supports the second main portion 31 with one beam. As shown in FIG. 1(b), the second cantilever portion 32 extends from the second main portion 31 in such a way to align with the extension direction of the first cantilever portion 22. The second fixed portion 33 fixes the second cantilever portion 32. The second fixed portion 33 is for the portion to which the vacuum container 50 described below is fixed.

The second board 30 includes a second inlet channel 34 and a second outlet channel 35. In the illustrated example, the second inlet channel 34 and the second outlet channel 35 are provided in the form of a second concave groove which is disposed on the second board 30. The second inlet channel 34 is for the introduction of the oxidant fuel gas into the cathode 12 of the cell 10. More specifically, the second inlet channel 34 is for introducing the oxidant fuel gas into the cathode 12 of the cell 10 placed on the second main portion 31 via the second cantilever portion 32 from the second fixed portion 33.

The oxidant fuel gas is, for example, oxygen or the like. The second outlet channel 35 is for discharging the oxidant fuel exhaust gas from the cathode 12 of the cell 10. More specifically, the second outlet channel 35 is for discharging the oxidant fuel exhaust gas from the second fixed portion 33 via the second cantilever portion 32 from the cathode 12 of the cell 10 placed on the second main portion 31. The oxidant fuel exhaust gas includes unreacted gas. In the small fuel cell of the present invention, one of the characteristics is that the second inlet channel 34 and the second outlet channel 35 are disposed adjacent enough with each other for heat exchangeable within the second cantilever portion 32.

That is, the second inlet channel 34 is a passage through which low-temperature gas flows, and the second outlet channel 35 is a passage through which the high-temperature gas flows after passing through the cell 10. These channels are disposed adjacent enough with each other for heat exchangeable, so that the high-temperature oxidant fuel exhaust gas flowing through the second outlet channel 35 can be cooled down by the low-temperature oxidant fuel gas flowing through the second inlet channel 34. Conversely, the low-temperature oxidant fuel gas flowing through the second inlet channel 34 can be heated up by the high-temperature oxidant fuel exhaust gas flowing through the second outlet channel 35.

This prevents the second cantilever portion 32 from being heated up unnecessarily, and this also makes it possible to introduce the heat oxidant fuel gas into the cathode 12 after heating the gas up with the oxidant fuel exhaust gas. This can improve power generation efficiency. Within the second cantilever portion 32, the closer second inlet channel 34 and the second outlet channel 35 are, and the smaller the cross-sectional areas of the channels, the more likely heat exchange is to occur. The heat exchange is also more likely to occur with a rectangular channel cross sectional area and by making wider the plane of the second inlet channel 34 and its opposing plane of the second outlet channel 35.

Further, in the illustrated example, when seen from the second fixed portion 33, a bypass channel is provided near the cell 10 in such a way that the second inlet channel 34 is to introduce the oxide fuel gas from the far side of the second main portion 31 to the cell 10; a linear channel is provided from the cell 10 in such a way that the second outlet channel 35 discharges the oxidant fuel exhaust gas from the near side of the second main portion 31. This allows the gas to go around near the heated cell 10, which makes it possible to further heat up the oxidant fuel gas with the heat from the cell 10 when the oxidant fuel gas is introduced.

Even for the second board 30, since the same material, such as ceramics, is used to form the second main portion 31, the second cantilever portion 32, the second fixed portion 33, the second inlet channel 34 and the second outlet channel 35, there will be no problems with differences in thermal expansion coefficients. The second main portion 31, the second cantilever portion 32, and the second fixed portion 33 are not necessarily limited to those integrally formed from the same material. They may be individual parts so long as they have close thermal expansion coefficients.

As shown in FIG. 2(b), when seen in a top view, the first inlet channel 24 and the first outlet channel 25 may be arranged to overlap with the second outlet channel 35 and the second inlet channel 34, respectively. This arrangement makes the first inlet channel 24 and the second outlet channel 35 be disposed adjacent enough with each other for heat exchangeable. This arrangement also makes the first outlet channel 25 and the second inlet channel 34 be disposed adjacent enough with each other for heat exchangeable.

Furthermore, the example shown in FIG. 2 involves a three-layered structure; the spacer board 40 is positioned between the first board 20 and the second board 30. The spacer board 40 may be, for example, made of ceramics. The present invention is not limited to this. The spacer board 40 may be, for example, glass, inorganic crystal or the like.

The spacer board 40 includes a spacer main portion 41, a spacer cantilever portion 42, and a spacer fixed portion 43. The spacer main portion 41 has a through-hole space 44 through which the cell 10 is accommodated. In the illustrated example, a circular through-hole space 44 is provided to accommodate the cell 10. The space cantilever portion 42 extends from the spacer main portion 41. The spacer cantilever portion 42 is thinner than the spacer main portion 41, and supports the space main portion 41 with one beam. As shown in FIG. 1(b), the spacer cantilever portion 42 extends from the spacer main portion 41 in such a way to align with the extension direction of the first cantilever portion 22. The spacer fixed portion 43 fixed the space cantilever portion 42. The spacer fixed portion 43 is for the portion to which the vacuum container 50 described below is fixed.

As described above, in the illustrated example, the first inlet channel 24 and the first outlet channel 25 are provided in the form of a concave groove provided on the first board 20; the second inlet channel 34 and the second outlet channel 35 are provided in the form of a concave groove provided on the second board 30. The present invention is not limited to this; the channels may be provided in the form of a concave groove on the spacer board 40; or the channels may be provided in the form of a concave groove on the first board 20 and the spacer board 40 that are combined together, as well as of a concave groove on the second board 30 and the spacer board 40 combined together.

In this manner, the first board 20, the second board 30 and the spacer board 40 all have the same shape in terms of appearance, and they are stacked up into one unit. However, the present invention is not limited to this. For example, they may be integrally formed by a 3D printer or the like. When they are formed by the 3D printer or the like, each channel may be a hollow hole, rather than a concave groove.

Referring back to FIG. 1, the vacuum container 50 is used to trap the heat generated from the cell 10 inside. The vacuum container 50 may have a heat resistance structure that either employs vacuum or uses noble gas, such as argon gas. The vacuum container 50 encircles a first board 20, a second board 30 and a spacer board 40. The first fixed portion 23, the second fixed portion 33 and the spacer fixed portion 43 are fixed to the vacuum container 50. A heat resistance structure can be realized by controlling an atmosphere using vacuum or noble gas, such as argon gas in an interior space of the vacuum container 50.

Referring to FIG. 1(b), the first cantilever portion 22 may be, as indicated by dotted line, formed in such a way as to expand toward the first fixed portion 23. Similarly, the second cantilever portion 32 may be formed in such a way as to expand toward the second fixed portion 33. More specifically, a connection portion of the first cantilever portion 22 with the first fixed portion 23 may be formed in such a way as to have an expanding shape. Similarly, a connection portion of the second cantilever portion 32 with the second fixed portion 33 may be formed to have an expanding shape. The expanding shape may be a curved expanding shape, or a linearly expanding shape as shown by dotted line in the drawing. The linearly expanding shape provides a higher heat resistance. Angle θ of the expanding shape relative to the connection portion of the fixed portion is preferably between around 20° and 40° in terms of the heat resistance.

With the configuration described above, the small fuel cell of the present invention can reduce the risk of the first board 20, the second board 30 and the spacer board 40 breaking down due to heat even when the cell is run at high temperatures, because of being held by the cantilever portion, and can provide the high heat resistance. This increases the heat resistance of the cell. In addition, since the channels are disposed adjacent enough with each other for heat exchangeable, and insulation is provided by the vacuum container, the heat resistance and the power generation efficiency are high.

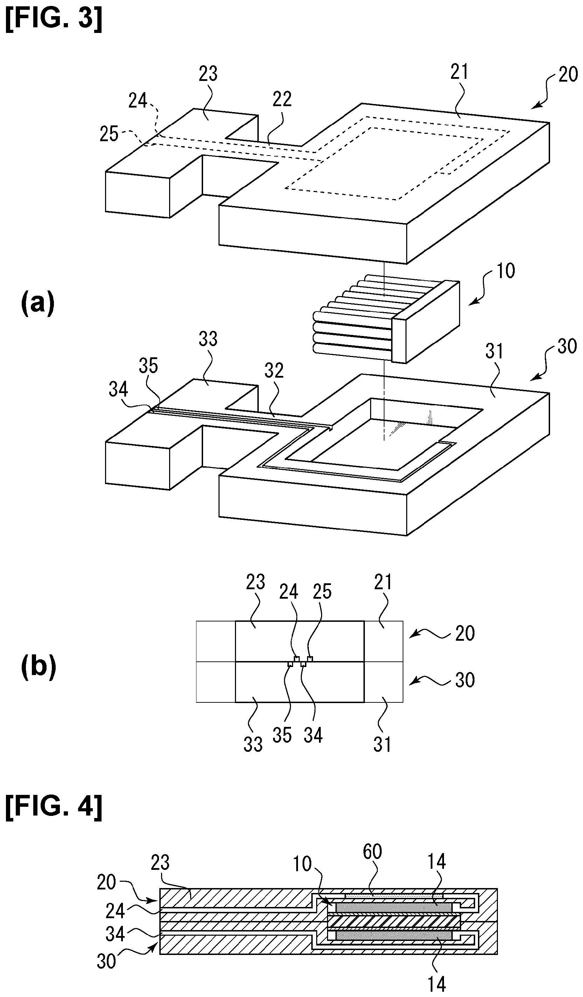

Another example of a board structure of the small fuel cell of the present invention will be described with FIG. 3. FIG. 3 is a schematic diagram for explaining in detail a two-layered structure of boards of the small fuel cell of the present invention; FIG. 3(a) is an exploded perspective view, and FIG. 3(b) is a side view when seen from a fixed portion. In the drawing, the same reference numerals as those in FIG. 1 denote the same parts. While FIG. 2 shows an example of the three-layered structure, FIG. 3 shows an example of a two-layered structure without the spacer board. In the example described in the drawing, the first main portion 21 and the second main portion 31 are square-shaped. The present invention is not limited to this, and the parts may be circular-shaped. Moreover, the cell 10 is of a tube type, however, the present invention is not limited to this and the cell may be a flat-plate cell.

As shown in the drawing, the small fuel cell of the present invention may have a two- layered structure that uses the first board 20 and the second board 30, without a spacer board. The first inlet channel 24 and the first outlet channel 25 are provided in the form of a first concave groove. The second inlet channel 34 and the second outlet channel 35 are provided in the form of a second concave groove.

With the two- layered structure, if the channels are arranged to overlap with one another when seen in top view, they are connected to each other. Therefore, when the channels of the two-layered structure are provided as a concave groove, as shown in FIG. 3(b), the first inlet channel 24 and the first outlet channel 25 are placed in such a way as not to overlap with the second inlet channel 34 and the second outlet channel 35 when seen in top view. Even with such an arrangement, the channels can be disposed adjacent enough with each other for heat exchangeable.

Furthermore, the small fuel cell of the present invention may have a fuel reforming catalyst. FIG. 4 is a partial, schematic side sectional view for explaining an example of the case in which a small fuel cell of the present invention has a fuel reforming catalyst. In the drawing, the same reference numerals as those in FIG. 1 denote the same parts. The example shown in FIG. 4 is the one integrally created by 3D printer. The cell 10 is placed between the first board 20 and the second board 30, via the current collector 14. For example, in a fuel cell, when reducing fuel gas is made through the generation of hydrogen from the reaction between methane and water, copper catalyst or the like is used. Such chemical conversion requires high temperatures.

Therefore, as shown in FIG. 4, the small fuel cell of the present invention may have a fuel reforming catalyst 60. The fuel reforming catalyst 60 may be placed in the first inlet channel 24. Specifically, the fuel reforming catalyst 60 may be placed in the first inlet channel 24 in such a way as to be close to the cell 10. More specifically, the fuel reforming catalyst 60 may be placed inside the first inlet channel 24, which is formed in such a way as to pass near the upper side of the cell 10, so that the fuel reforming catalyst 60 is situated near the upper side of the cell 10. The small fuel cell of the present invention can improve its reforming efficiency with the configuration described in FIG. 4, because heat generated from the cell 10 can be given to the fuel reforming catalyst 60.

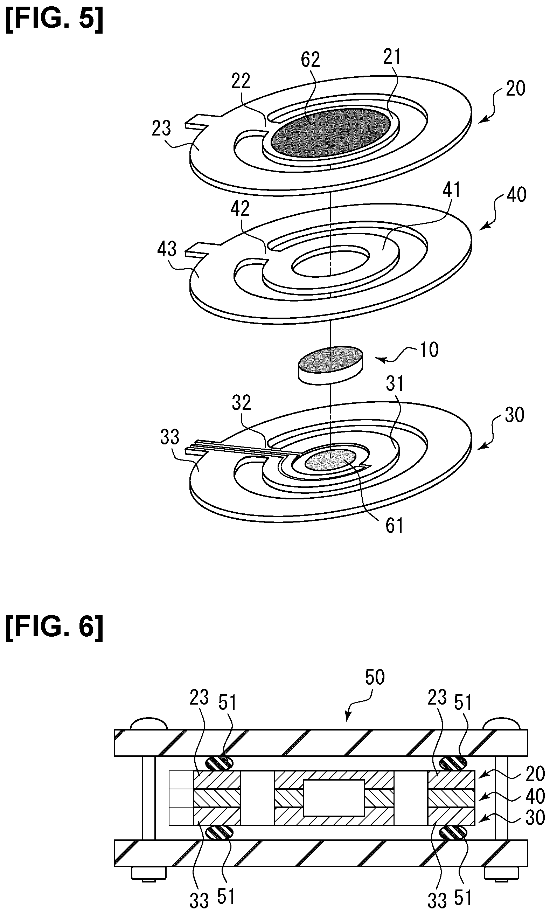

Another example of a fixed portion of the board of the small fuel cell of the present invention will be described with FIG. 5. FIG. 5 is a schematic exploded perspective view for explaining in detail another example of a fixed portion of the board of the small fuel cell of the present invention. In the drawing, the same reference numerals as those in FIG. 1 denote the same parts. The illustrated example is an example of a three-layered structure. However, the present invention is not limited to this, and this may be a two- layered structure. As shown in the drawing, the first fixed portion 23 is placed in such a way as to cover the periphery of the first main portion 21. Specifically, the first fixed portion 23 is ring-shaped. Similarly, the second fixed portion 33 is placed in such a way as to cover the periphery of the second main portion 31. Specifically, the second fixed portion 33 is ring-shaped.

Moreover, the spacer fixed portion 43 of the spacer board 40 is ring-shaped in such a way as to cover the periphery of the spacer main portion 41. Each channel may be arranged in a similar way to those described in the above examples. In the illustrated example, the end portions of channels of the first and second fixed portions 23 and 33, and the corresponding end portions of the spacer fixed portion 43 are tab-shaped. Also, as shown in the drawing, the example is illustrated that each fixed portion is a concentrically ring-shaped structure relative to each main portion. However, the present invention is not limited to this, and there may not be concentric circles, with each cantilever portion made longer or shorter. In the case of the small fuel cell of the present invention, unlike the circular main and fixed portions shown in the drawing, the parts may be hexagonally shaped.

Furthermore, the first and second boards 20 and 30 of the small fuel cell of the present invention may have a metal portion that can be used for heaters or temperature sensors. As shown in FIG. 5, the metal portion 61 may be placed on a plane of the first or second main portion 21 or 31 on which the cell 10 is placed. The metal portion 61 may be made of platinum or the like. Making current flow through the metal portion 61 allows the metal portion 61 to use as a heater. This makes it possible to increase the operational temperature of the cell 10.

The metal portion 61 can be used as a temperature sensor by measuring changes in the resistance value of the metal portion 61. This makes it possible to measure the temperature of the cell 10. The metal portion 61 may be provided on both the first board 20 and the second board 30, or may be provided on either one. In the illustrated example, on a plane on which the cell 10 is placed, the metal portion 61 is provided.

However, the present invention is not limited to this. For example, because the first main portion 21 or the second main portion 31 has a cylindrical hollow on which the cell 10 is placed, a metal portion may be provided on the inner side of the hollow. Moreover, a metal portion provided for use as a heater or temperature sensor may be situated where temperature measurement is required; the metal portion may be placed on the surface of the board, or may be embedded in the board.

A thin metal film for radiation mitigation may be formed on the first board 20 and the second board 30 of the small fuel cell of the present invention. As shown in FIG. 5, on the opposite sides of the first main portion 21 and the second main portion 31 from on which the cell 10 is placed, a thin metal film 62 may be formed. The thin metal film 62 is to keep heat generated from the cell 10 from radiating beyond the first board 20 and the second board 30. The radiation-mitigation thin metal film 62 can curb heat losses. In the illustrated example, the thin metal film 62 is provided only on the opposite side of the plane on which the cell 10 is placed. However, the present invention is not limited to this. The thin metal film 62 may be formed not just on the opposite sides of the first main portion 21 and the second main portion 31 on which the cell 10 is placed, but on the sides of the first main portion 21 and the second main portion 31. This further reduces radiation.

A structure will be described with FIG. 6, in which the board having the fixed portion as shown in FIG. 5 is fixed to the vacuum container. FIG. 6 is a schematic side sectional view for explaining in detail an example how a fixed part of a board of a small fuel cell of the present invention is fixed to a vacuum container. In the drawing, the same reference numerals as those in FIG. 1 denote the same parts. As shown in the drawing, the first fixed portion 23 and the second fixed portion 33 can be fixed to the vacuum container 50 in a sealed state.

Specifically, the ring-shaped first fixed portion 23 and second fixed portion 33 are fixed to the vacuum container 50 in a sealed state with the sealing material 51. The vacuum container 50 may consist of two polycarbonate plates, for example. The ring-shaped first fixed portion 23 and second fixed portion 33 may be vertically sandwiched by the two plates via the sealing material 51 and fastened with screws or the like. In the inner space surrounded by the sealing material 51, atmosphere control may be realized with vacuum, or noble gas like argon gas.

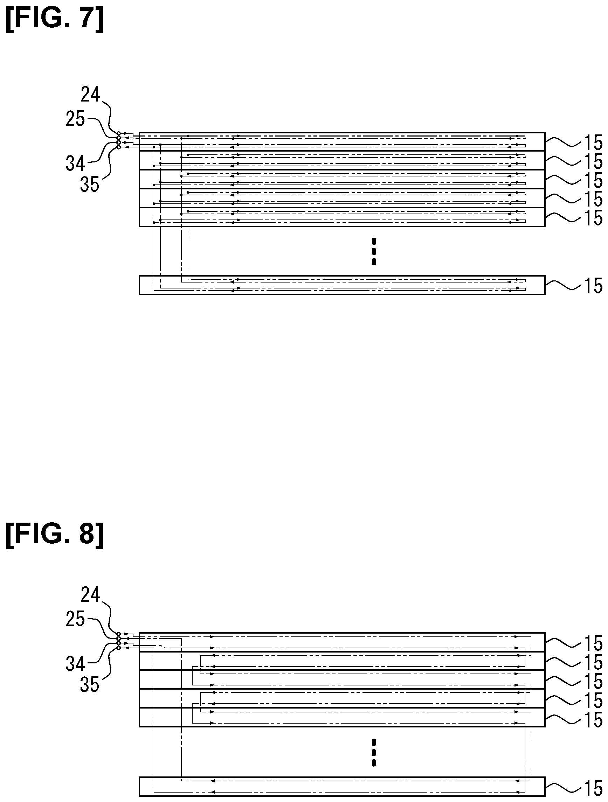

In the above illustrated example, while the small fuel cell described has one cell 10, a practical fuel cell in fact has a stack of multiple cells designed to boost its output. Hereinafter, an example of the small fuel cell of the present invention that is of a layered structure will be described with FIG. 7. FIG. 7 is a schematic side view for explaining in detail a layered structure of the small fuel cell of the present invention. In the drawing, the same reference numerals as those in FIG. 1 denote the same parts. In the illustrated example, a vacuum container is omitted. Moreover, such board parts as the cell 10, the first board 20 and the second board 30 are collectively referred to as the single cell structure 15. For the single cell structure 15, various configurations are applicable as described above.

In the small fuel cell in which multiple layers are stacked, each channel may be formed in such manners as described below. That is, the first inlet channels 24 of the multiple single cell structures 15 are connected in such a way to run parallel to one another. Similarly, the first outlet channels 25 are connected in such a way to run parallel to each other. Moreover, the second inlet channels 34 are connected in such a way to run parallel to one another. The second outlet channels 35 are connected in such a way as to run parallel to one another. To connect the parallel channels, as shown in the drawing, each board structure can have a channel extending vertically. The vertical channel may be provided outside of the single cell structures 15. Such a configuration of channels enables the supply of fuel to each cell in a parallel manner. The configuration of parallel channels makes it possible to feed more fuel and increase its concentration, thereby boosting the output.

In the illustrated example, each inlet channel and each outlet channel are connected and put together as a common inlet channel and a common outlet channel, and the channels are provided on the top of the single cell structures 15. However, the present invention is not limited to this. In each of the multiple single cell structures 15, an inlet channel and an outlet channel may be provided, and, to each of the single cell structure 15, supplying of fuel and discharging of air can be conducted separately.

As shown in FIG. 8, channels may be configured in series. FIG. 8 is a schematic side view for explaining in detail another example of a layered structure of the small fuel cell of the present invention. In the drawing, the same reference numerals as those in FIG. 1 denote the same parts. This example is similar to that of FIG. 7 in terms of the structure in which the multiple single cell structures 15 are stacked. In the example shown in FIG. 8, channels are configured in series. The first outlet channel 25 is connected to another inlet channel 24 in series. The second outlet channel 35 is connected to another second inlet channel 34 in series.

In the illustrated example, the channels of upper and lower board structures have a right-left-inverted structure, and they are configured in such a way as to have a zigzag channel. However, the present invention is not limited to this. With the same configuration of upper and lower board structures' channels, a separate channel may be provided to turn around. When channels are configured in series, unreacted gas can be used, leading to an improvement in fuel usage efficiency.

In the illustrated example, each inlet channel and each outlet channel are provided on the top of the single cell structures 15. However, the present invention is not limited to this, and the first inlet channel 24 and the second inlet channel 34 may be provided on the top of the single cell structures 15, while the first outlet channel 25 and the second outlet channel 35 may be provided on the bottom of the single cell structures 15. That is, fuel may be supplied from the top, and air may be discharged from the bottom. This structure can be turned upside down.

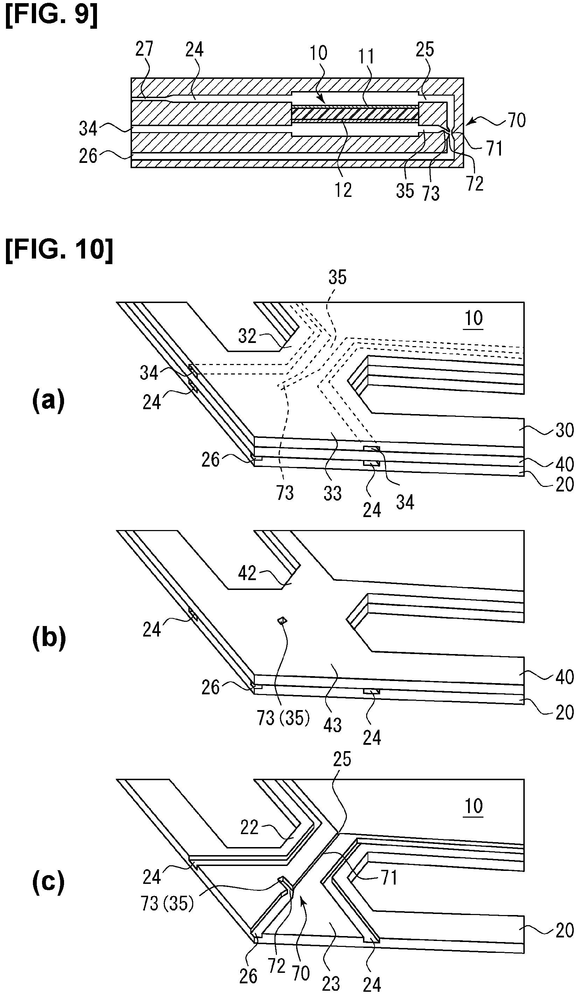

A system of taking in and discharging air of the small fuel cell of the present invention will be described. In the small fuel cell, when fuel is taken in or discharged, a mechanical pump may be used. However, for the small fuel cell of the present invention, venturi effect can be applied as described below. FIG. 9 is a schematic side sectional view for explaining an intake-discharge system of a small fuel cell of the present invention. In the drawing, the same reference numerals as those in FIG. 1 denote the same parts. As shown in the drawing, in this example, a venturi tube structure 70 is provided. The venturi tube structure 70 includes a throat portion 71 and an inlet 72. The throat portion 71 is placed in the first outlet channel 25. Because of the throat portion 71, relative to the first outlet channel 25, the cross-sectional area of a channel is smaller. This structure causes the venturi effect, leading to an increase in flow rate and a decrease in pressure. The inlet 72 is provided at the throat portion 71. The second outlet channel 35 is connected to the inlet 72.

According to the venturi tube structure 70, reducing fuel exhaust gas flowing through the first outlet channel 25 speeds up because of the throat portion 71 of the venturi tube structure 70. This results in a decrease in pressure, which leads to negative pressure. This enables oxidant fuel exhaust gas to be sucked from the second outlet channel 35 connected to the inlet 72. As a result, oxidant fuel gas is introduced from the second inlet channel 34. In addition, the first outlet channel 25 and the second outlet channel 35 work as the common outlet channel 26, and reducing fuel exhaust gas and oxidant fuel exhaust gas are discharged.

The second outlet channel 35 may be connected to the inlet 72 in such a way as to run perpendicular to the downstream direction of a flow of reducing fuel exhaust gas of the venturi tube structure 70. However, as shown in the drawing, the second outlet channel 35 may be connected in such a way as to be oblique to the downstream direction. When the second outlet channel 35 is connected to the inlet 72 in such a way as to run obliquely in the downstream direction, oxidant fuel exhaust gas can be taken in from the inlet 72 smoothly.

The second outlet channel 35 may be connected to the inlet 72 of the venturi tube structure 70 without a change in the size of the passage of the second outlet channel 35. However, as shown in the drawing, the second outlet channel 35 may instead be connected to the inlet 72 via a constricted portion 73. That is, the second outlet channel 35 may have, where it is connected to the inlet 72 of the venturi tube structure 70, the constricted portion 73 whose channel cross-sectional area becomes smaller, relative to the second outlet channel 35. When the constricted portion 73 is provided, the pressure decreases more, thereby increasing the flow rate.

The shape and channel size of the venturi tube structure 70 are not limited to those shown in the drawings. They may be designed appropriately depending on the amount and speed of air that needs to be taken in.

As shown in the drawing, in the first inlet channel 24, the capillary structure 27 may be provided. The capillary structure 27 is placed in the first inlet channel 24 to take in liquid fuel; the capillary structure 27 is configured in such a way as to cause capillary action because of its small channel cross-sectional area relative to the first inlet channel 24. When the fuel for the small fuel cell of the present invention is, for example, liquid fuel such as bioethanol, the liquid fuel can be taken in by the capillary structure 27. As liquid fuel is taken in by the capillary structure 27, oxidant fuel exhaust gas is taken in because of the flow of reducing fuel exhaust gas of the first outlet channel 25 of the above-described venturi tube structure 70. In this manner, even with a pump-less structure where no mechanical pump is used, fuel supplies are possible.

The capillary structure 27 can be put in a place that is heated by the operational temperature of the cell 10. This configuration allows the liquid fuel taken in by the capitally structure 27 to be heated, and evaporated in the first inlet channel 24, turning into reducing fuel gas. As a result, it becomes available as fuel for the cell 10. Furthermore, when the temperature of the capillary structure 27 is controlled by a heater, the amount of fuel to be supplied can be controlled by temperature as well. Specifically, when the capitally structure 27 is heated, with on-off control of the heater, on-off control of the small fuel cell is also possible.

A three-layered structure small fuel cell, in which venturi tube structure 70 is incorporated, will be described in detail with FIG. 10. FIG. 10 is a schematic diagram for explaining in detail the case in which a venturi tube structure is incorporated into a three-layered structure board of a small fuel cell of the present invention; FIG. 10(a) is a perspective view of a situation where a first board, a second board and a spacer board are stacked,
FIG. 10(b) is a perspective view of a situation where a first board and a spacer board are stacked, excluding a second board, and FIG. 10(c)is a perspective view of a first board, excluding a second board and a spacer board. In the drawing, the same reference numerals as those in FIG. 9 denote the same parts. In the illustrated example, a venturi tube structure and its surroundings are shown, and other parts are omitted. The illustrated example is of a type that has hexagonal main and fixed portions.

As shown in FIG. 10, the venturi tube structure 70 is provided to the first board 20. More specifically, the first outlet channel 25 on the side of the anode 11 of the cell 10 is directly provided as the throat portion 71, in the form of a narrow concave groove whose channel cross-sectional area is small. The common outlet channel 26 with an expanded flow passage is provided in the form of a concave groove connected to the throat portion 71. Moreover, the inlet 72 is placed at a connection portion of the throat portion 71 and the common outlet channel 26, and the second outlet channel 35 is provided in the form a concave groove connected to the inlet 72. In the illustrated example, the second outlet channel 35 has the constricted portion 73, and, in this case, a concave groove connected to the inlet 72 serves as the constricted portion 73.

In the spacer board 40, the second outlet channel 35 is provided in the form of a vertical through-hole. In the illustrated example, the second outlet channel 35 has the constricted portion 73, and, in this case, a through-hole on the spacer board 40 serves as the constricted portion 73. When the boards are stacked, a through-hole of the second outlet channel 35 of the spacer board 40 overlaps with a concave groove of the second outlet channel 35 of the first board 20, or, more specifically, with an end portion of the constricted portion 73.

The second board 30 is provided with the second outlet channel 35 in the form of a concave groove. In the illustrated example, on the tip of the concave groove of the second outlet channel 35, the constricted portion 73 is provided by a concave groove that is narrow in channel cross-sectional area. When the boards are stacked, the concave groove of the constricted portion 73 overlaps with a through-hole of the spacer board 40 and a concave groove connected to the inlet 72 of the first board 20. In the small fuel cell of the present invention, even if it has such a layered structure, the venturi tube structure 70 can be incorporated.

In the illustrated example, in a similar way to the small fuel cell of the present invention as described above, the first inlet channel 24 and the first outlet channel 25 are disposed adjacent enough with each other for heat exchangeable within the the first cantilever portion 22; the second inlet channel 34 and the second outlet channel 35 are disposed adjacent enough with each other for heat exchangeable within the second cantilever portion 32. In the illustrated example, the channels disposed adjacent enough with each other for heat exchangeable within the cantilever portions 22 and 32, the first inlet portion 24 and the first outlet portion 25, as well as the second inlet channel 34 and the second outlet channel 35, are placed apart from one another in the first fixed portion 23 and the second fixed portion 33. Even with such a configuration, in a similar way to the small fuel cell of the present invention described above, in the cantilever portions 22 and 32, high-temperature reducing fuel exhaust gas can be cooled by low temperature reducing fuel gas.

Furthermore, in the illustrated example, there are the multiple first inlet channels 24 and second inlet channels 34. Specifically, the first inlet channels 24 are placed on the left and right sides as two inlet channels; the second inlet channels 34 are placed on the left and right sides as two inlet channels. This configuration makes it possible to introduce reducing fuel gas and oxidant fuel gas into the cell 10 more efficiently.

The small fuel cell of the present invention is not limited to the above-mentioned illustrated example, and various modifications can be made without departing from the spirit of the present invention.

### List of Reference Signs

- 10:: Cell
- 11:: Anode
- 12:: Cathode
- 13:: Electrolyte
- 14:: Current collector
- 15:: Single cell structure
- 20:: First board
- 21:: First main portion
- 22:: First cantilever portion
- 23:: First fixed portion
- 24:: First inlet channel
- 25:: First outlet channel
- 26:: Common outlet channel
- 27:: Capillary structure
- 30:: Second board
- 31:: Second main portion
- 32:: Second cantilever portion
- 33:: Second fixed portion
- 34:: Second inlet channel
- 35:: Second outlet channel
- 40:: Spacer board
- 41:: Spacer main portion
- 42:: Spacer cantilever portion
- 43:: Spacer fixed portion
- 44:: Through-hole space
- 50:: Vacuum container
- 51:: Sealing material
- 60:: Fuel reforming catalyst
- 61:: Metal portion
- 62:: Thin metal film
- 70:: Venturi tube structure
- 71:: Throat portion
- 72:: Inlet
- 73:: Constricted portion

## Claims

1. A small fuel cell with portability, the small fuel cell comprising:
a cell that has an anode, a cathode and an electrolyte in-between;
a first board for accommodating the cell, which includes a first main portion, where the cell is placed, a first cantilever portion, which extends from the first main portion, a first fixed portion, which extends from the first cantilever portion and fixes the first cantilever portion, a first inlet channel, which is configured to introduce reducing fuel gas into the anode of the cell, a first outlet channel, which is configured to discharge reducing fuel exhaust gas from the anode of the cell, the first inlet channel and the first outlet channel being disposed adjacent enough with each other for heat exchangeable within the first cantilever portion;
a second board for accommodating the cell along with the first board to cover the cell, which includes a second main portion, where the cell is placed, a second cantilever portion, which extends from the second main portion in such a way to align with an extension direction of the first cantilever portion, a second fixed portion, which extends from the second cantilever portion and fixes the second cantilever portion, a second inlet channel, which is configured to introduce oxidant fuel gas into the cathode of the cell, a second outlet channel, which is configured to discharge oxidant fuel exhaust gas from the cathode of the cell, the second inlet channel and the second outlet channel being disposed adjacent enough with each other for heat exchangeable within the second cantilever portion; and
a vacuum container for trapping heat generated from the cell inside, which encircles the first board and the second board and where the first fixed portion and the second fixed portion are fixed.

2. The small fuel cell according to claim 1,
wherein the first board and the second board are made of ceramics, glass or inorganic crystal.

3. The small fuel cell according to claim 1,
wherein the first board and the second board are stacked or formed integrally.

4. The small fuel cell according to claim 1,
wherein the small fuel cell is a stack of board structures, each of which includes the cell, the first board and the second board, in such a way that, when seen in a top view, extension directions of the first cantilever portions are aligned with each other.

5. The small fuel cell according to claim 4,
wherein, in the multilayered small fuel cell,
the first inlet channels are connected together as parallel channels,
the first outlet channels are connected together as parallel channels,
the second inlet channels are connected together as parallel channels, and the second outlet channels are connected together as parallel channels.

6. The small fuel cell according to claim 4,
wherein, in the multilayered small fuel cell,
the first outlet channel is connected to another first inlet channel in series, and the second outlet channel is connected to another second inlet channel in series.

7. The small fuel cell according to claim 1,
wherein the first board or the second board has a metal portion for a heater or a temperature sensor.

8. The small fuel cell according to claim 1,
wherein, in the first board and the second board, a thin metal film for radiation mitigation is formed on the opposite sides of the first and second main portions from where the cell is placed, or on the opposite sides of the first and second main portions from where the cell is placed and on their sides.

9. The small fuel cell according to claim 1,
wherein the first cantilever portion is shaped in such a way as to expand toward the first fixed portion; and
the second cantilever portion is shaped in such a way as to expand toward the second fixed portion.

10. The small fuel cell according to claim 1,
wherein the first inlet channel and the first outlet channel are provided in the form of a first concave groove provided on the first board;
the second inlet channel and the second outlet channel are provided in the form of a second concave groove provided on the second board; and
the first inlet channel and the first outlet channel are each placed in such a way as not to overlap with the second inlet channel and the second outlet channel, respectively, when seen in a top view.

11. The small fuel cell according to claim 1, which further comprises a spacer board that is placed between the first board and the second board, wherein
the spacer board includes a spacer main portion, which includes a through-hole space for accommodating the cell, a spacer cantilever portion, which extends from the spacer main portion in such a way as to align with an extension direction of the first cantilever portion, and a spacer fixed portion, which extends from the spacer cantilever portion and fixes the spacer cantilever portion.

12. The small fuel cell according to claim 11,
wherein the first inlet channel and the first outlet channel are provided in the form of a first concave groove provided on the first board and/or the spacer board; and the second inlet channel and the second outlet channel are provided in the form of a second concave groove provided on the second board and/or the spacer board.

13. The small fuel cell according to claim 12,
wherein the first inlet channel and the first outlet channel are placed in such a way as to overlap with the second outlet channel and the second inlet channel, respectively, when viewed in top view.

14. The small fuel cell according to claim 1,
which further comprises a fuel reforming catalyst for reforming a reducing fuel gas being introduced into the anode of the cell, wherein
the fuel reforming catalyst is placed near the cell at the first inlet channel.

15. The small fuel cell according to claim 1,
wherein the first fixed portion is placed in such a way as to encircle the periphery of the first main portion;
the second fixed portion is placed in such a way as to encircle the second main portion; and
the first fixed portion and second fixed portion are fixed to a vacuum container in a sealed state.

16. The small fuel cell according to claim 1,
wherein the cell is a flat-plate cell or a tube-type cell.

17. The small fuel cell according to any one of claims 1 to 16,
which further comprises
a venturi tube structure placed in the first outlet channel that has a throat portion, whose channel cross-sectional area is smaller than that of the first outlet channel, causing a venturi effect through the throat portion, the venturi tube structure including an inlet placed at the throat portion, and the second outlet channel connected to the inlet.

18. The small fuel cell according to claim 17,
wherein the second outlet channel is connected in such a way as to run obliquely to the downstream direction of a flow of reducing fuel gas of the venturi tube structure relative to the inlet.

19. The small fuel cell according to claim 17,
wherein the second outlet channel has a constricted portion, whose channel cross-sectional area is smaller than that of the second outlet channel, where the second outlet channel is connected to the inlet of the venturi tube structure.

20. The small fuel cell according to any one of claims 1 to 19,
wherein the fuel of the small fuel cell is a liquid fuel, and
which further comprises a capillary structure placed in the first inlet channel to take in the liquid fuel, whose channel cross-sectional area is smaller compared to the first inlet channel so that a capillary phenomenon is obtained.

21. The small fuel cell according to claim 20,
wherein the capillary structure is placed where the structure is heated by operational temperature of the cell.

22. The small fuel cell according to claim 21,
wherein the capillary structure is configured to cause a reducing fuel gas through the heating and evaporation of liquid fuel being taken in.
